# EUROPEAN PATENT APPLICATION

(11) **EP 4 838 827 A2**
(43) Date of publication of application: **11.11.2026**
(21) Application number: 26199283.8
(22) Date of filing: 15.01.2018
(51) Int. Cl.: H04L 5/00

(54) **SEPARATE CONFIGURATION OF NUMEROLOGY-ASSOCIATED RESOURCES**

(30) Priority: 20.01.2017 US 201762448676 P
(62) Document number(s) of the earlier application(s) in accordance with Art. 76 EPC: 25212216.3 / 4 664 815; 21151550.7 / 3 826 343; 18741302.6 / 3 563 600
(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong, 523860 (CN); XU, Hua, Ottawa, Ontario, K2M 1N6 (CA)
(74) Representative: Grassi, Stefano

(57) **Abstract**

Disclosed is a method and apparatus for separately configuring sets of frequency resources for a PDCCH and another physical channel. According to the method, the first and second messages are configured separately to respectively indicate the sets of frequency resources with associated numerologies for the PDCCH and other physical channels.

## Description

### TECHNICAL FIELD

The disclosure generally relates to resource configuration in the field of communications, and more particularly, to a method and apparatus for separately configuring sets of frequency resources for a Physical Downlink Control Channel (PDCCH) and another physical channel.

### BACKGROUND

In Long Term Evolution (LTE) of the 4th-Generation (4G) communication, physical channels, such as both a PDCCH and a PDSCH, are transmitted over whole system bandwidth and use a single numerology. For example, in the whole system bandwidth, both the PDCCH and the PDSCH use the same subcarrier spacing (SCS), such as, 15 kHz.

Along with the proposal and research of the 5th-Generation (5G) communication technology, a system bandwidth of a carrier can be partitioned into multiple resource sets (or called Bandwidth Parts (BWPs), or subbands). Each of the BWPs is associated with a specific numerology. Thus, it is a problem how to configure the resource sets for the physical channels.

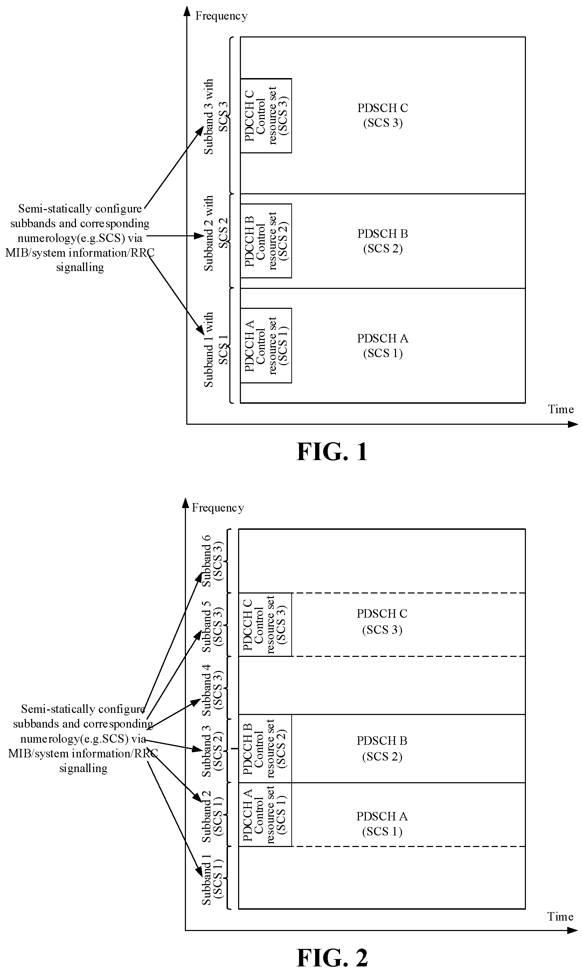

In a related technology, there is an approach for configuring subbands with associated numerologies for the PDCCH and the PDSCH. According to this approach, the subbands with associated numerologies are indicated for the PDCCH(s) and the PDSCH(s) at the same time only via a system message, such as, System Information (SI), a Radio Resource Control (RRC) signaling or a broadcasting signaling. For example, FIG. 1 and FIG. 2 show a schematic configuration in a variable-bandwidth subband scenario and in an identical-bandwidth subband scenario, respectively. In these two scenarios, the SCS is taken for an example of associated numerologies. As shown in FIG. 1, subband 1 with SCS 1, subband 2 with SCS 2 and subband 3 with SCS 3 are respectively indicated at the same time for PDCCH A and PDSCH A, PDCCH B and PDSCH B, as well as PDCCH C and PDSCH C, in only one message. Further as shown in FIG. 2, subband 2 with SCS 1 is indicated for both PDCCH A and PDSCH A via SI, a RRC signaling or a broadcasting signaling.

This approach can only configure a unified set of subbands/BWPs with associated numerologies for respective PDCCHs and PDSCHs all at once, and thus cannot fully and flexibly utilize the advantages about multiple resource sets with multi-numerology in the 5G technology.

### SUMMARY

The implementations of the disclosure provide a configuration solution for separately configuring sets of frequency resources for a Physical Downlink Control Channel (PDCCH) and another physical channel.

In a first aspect of the disclosure, a method for configuring sets of frequency resources for a Physical Downlink Control Channel (PDCCH) and another physical channel is provided. According to the method, a first message and a second message are configured. The first message is configured to indicate a first set of frequency resources with a first associated numerology for the PDCCH, and the second message is configured to indicate a second set of frequency resources with a second associated numerology for the another physical channel. The first message and the second message are transmitted. The PDCCH is transmitted in a resource from the first set of frequency resources and the another physical channel is transmitted in a resource from the second set of frequency resources.

In a second aspect of the disclosure, a method for determining sets of frequency resources for a Physical Downlink Control Channel (PDCCH) and another physical channel is provided. According to the method, the PDCCH is received, the PDCCH being transmitted in a resource from a first set of frequency resources with a first associated numerology. The first set of frequency resources with the first associated numerology is indicated by a first message for the PDCCH. The another physical channel is received, the another physical channel being transmitted in a resource from a second set of frequency resources with a second associated numerology. The second set of frequency resources with the second associated numerology is indicated by a second message for the another physical channel. Sets of frequency resources for the PDCCH and the another physical channel are determined according to the first and second messages.

In a third aspect of the disclosure, an apparatus for separately configuring sets of frequency resources for a Physical Downlink Control Channel (PDCCH) and another physical channel is provided, which includes a configuration module and a transmission module. The configuration module configures a first message and a second message. The first message is configured to indicate a first set of frequency resources with a first associated numerology for the PDCCH, and the second message is configured to indicate a second set of frequency resources with a second associated numerology for the another physical channel. The transmission module transmits the first message and the second message, transmits the PDCCH in a resource from the first set of frequency resources and transmits the another physical channel in a resource from the second set of frequency resources.

In an example, the first and second sets of frequency resources are a bandwidth part (BWP) or a control resource set (CORESET) in a BWP.

In an example, at least one portion of the first set of frequency resources may not overlap with the second set of frequency resources. A value of the first associated numerology may be different from a value of the second associated numerology.

In an example, the first message is one of SI, a RRC signaling, and a broadcasting signaling and the second message is Downlink Control Information (DCI) transmitted in the PDCCH or a following PDCCH.

In an example, the first message may include a common message and a UE-specific message, the common massage being configured to indicate a common control resource set with an associated numerology for a first PDCCH and the UE-specific message being configured to indicate a UE-specific control resource set with an associated numerology for a second PDCCH. The second message may be DCI transmitted in the first or second PDCCH.

In an example, the first message may come from a previous PDCCH.

In an example, the first associated numerology for the PDCCH is the same as that for the previous PDCCH.

In an example, each of the first and second messages may be one of SI, a RRC signaling, and a broadcasting signaling.

In an example, the another physical channel may be at least one of a Physical Downlink Sharing Channel (PDSCH), a Physical Uplink Control Channel (PUCCH) and a Physical Uplink Sharing Channel PUSCH.

In an example, each of the first and second associated numerologies may be at least one of a Subcarrier Spacing (SCS) and a cyclic prefix (CP).

In an example, the PDCCH may contain scheduling information of the another physical channel.

In a fourth aspect of the disclosure, an apparatus for determining sets of frequency resources for a Physical Downlink Control Channel (PDCCH) and another physical channel is provided, which includes a receiving module and a determination module. The receiving module is configured to receive the PDCCH and the another physical channel. The PDCCH is transmitted in a resource from a first set of frequency resources with a first associated numerology. The first set of frequency resources with the first associated numerology is indicated by a first message for the PDCCH. The another physical channel is transmitted in a resource from a second set of frequency resources with a second associated numerology. The second set of frequency resources with the second associated numerology is indicated by a second message for the another physical channel. The determination module is configured to determine sets of frequency resources for the PDCCH and the another physical channel according to the first and second messages.

In an example, the first and second sets of frequency resources are a bandwidth part (BWP) or a control resource set (CORESET) in a BWP.

In an example, at least one portion of the first set of frequency resources may not overlap with the second set of frequency resources. A value of the first associated numerology may be different from a value of the second associated numerology.

In an example, the first message may be one of SI, a RRC signaling, and a broadcasting signaling and the second message is Downlink Control Information (DCI) transmitted in the PDCCH or a following PDCCH.

In an example, the first message may include a common message and a UE-specific message, the common massage being configured to indicate a common control resource set with an associated numerology for a first PDCCH and the UE-specific message being configured to indicate a UE-specific control resource set with an associated numerology for a second PDCCH. The second message may be DCI transmitted in the first or second PDCCH.

In an example, the first message may come from a previous PDCCH.

In an example, the first associated numerology for the PDCCH is the same as that for the previous PDCCH.

In an example, each of the first and second messages may be one of SI, a RRC signaling, and a broadcasting signaling.

In an example, the another physical channel may be at least one of a Physical Downlink Sharing Channel (PDSCH), a Physical Uplink Control Channel (PUCCH) and a Physical Uplink Sharing Channel PUSCH.

In an example, each of the first and second associated numerologies may be at least one of a Subcarrier Spacing (SCS) and a cyclic prefix (CP).

In an example, the PDCCH may contain scheduling information of another physical channel.

It should be understood that the above general description and detailed description below are only exemplary and explanatory and not intended to limit the disclosure.

### BRIEF DESCRIPTION OF DRAWINGS

The disclosure will become more fully understood from the detailed description given hereinbelow and the accompanying drawings, which are given by illustration only, and thus are not limitative of the present disclosure, and wherein:
FIG. 1 is a schematic diagram showing configuration in a variable-bandwidth subband scenario according to the related technology.
FIG. 2 is a schematic diagram showing configuration in an identical-bandwidth subband scenario according to the related technology.
FIG. 3 is a flow chart showing a method for separately configuring sets of frequency resources for a PDCCH and another physical channel according to an implementation of the disclosure.
FIG. 4 is a schematic diagram showing configuration in a variable-bandwidth subband scenario according to an implementation of the disclosure.
FIG. 5 is a schematic diagram showing configuration in an identical-bandwidth subband scenario according to an implementation of the disclosure.
FIG. 6 is a schematic diagram showing configuration in a variable-bandwidth subband scenario according to another implementation of the disclosure.
FIG. 7 is a schematic diagram showing configuration in an identical-bandwidth subband scenario according to another implementation of the disclosure.
FIG. 8 is a schematic diagram showing configuration in a variable-bandwidth subband scenario according to still another implementation of the disclosure.
FIG. 9 is a schematic diagram showing configuration in a variable-bandwidth subband scenario according to yet another implementation of the disclosure.
FIG. 10 is a flow chart showing a method for determining sets of frequency resources for a PDCCH and another physical channel according to an implementation of the disclosure.
FIG. 11 is a schematic diagram illustrating an apparatus for separately configuring sets of frequency resources for a PDCCH and another physical channel according to an implementation of the disclosure.
FIG. 12 is a schematic diagram illustrating an apparatus for determining sets of frequency resources for a PDCCH and another physical channel according to an implementation of the disclosure.

### DETAILED DESCRIPTION

Reference will now be made in detail to exemplary implementations, examples of which are illustrated in the accompanying drawings. The implementations set forth in the following description of exemplary implementations do not represent all implementations consistent with the disclosure. Instead, they are merely examples of apparatuses and methods consistent with aspects related to the disclosure.

The basic idea of the disclosure is to separately configure the sets of frequency resources with corresponding numerologies for a PDCCH and other physical channels via separate signalings/messages. Thus, in one time scheduling unit (e.g. a slot, a mini-slot, a subframe), the PDCCH and other physical channels can have different subband partitioning and different numerology configurations.

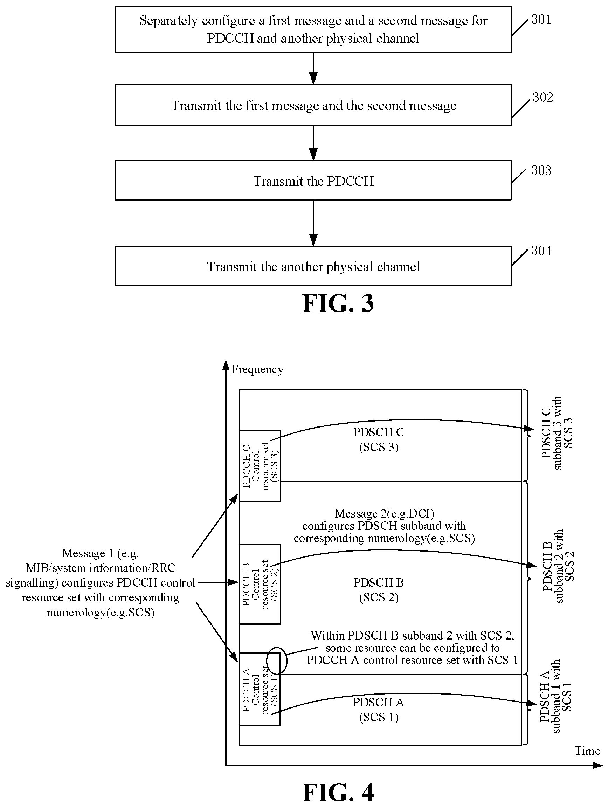

FIG. 3 is a flow chart showing a method for separately configuring sets of frequency resources for a PDCCH and another physical channel according to an implementation of the disclosure. This method may be applied at a base station (called gNB in 5G) side or a system side. Referring to FIG. 3, the method includes the following steps.

In step 301, a first message and a second message are configured separately. The first message is configured to indicate a first set of frequency resources with a first associated numerology for the PDCCH. The second message is configured to indicate a second set of frequency resources with a second associated numerology for the another physical channel.

In step 302, the first message and the second message are transmitted.

In step 303, the PDCCH is transmitted in a resource from the first set of frequency resources.

In step 304, the another physical channel is transmitted in a resource from the second set of frequency resources.

Herein, the first and second sets of frequency resources are a bandwidth part (BWP) or a subband or a control resource set (CORESET) in a BWP/subband. For example, the first set of frequency resources for the PDCCH is a control resource set (CORESET) in a subband and the second set of frequency resources for other physical channels is the subband. Referring to the implementation shown in FIG. 4, the sizes and positions of the control resource sets and their numerologies (taking SCS as an example) of the PDCCHs are indicated by Message 1, whereas the sizes and positions of the subbands and their numerologies (also taking SCS as an example) of the PDSCHs are configured by Message 2. Specifically, a control resource set with SCS 2 in subband 2 is indicated by Message 1 for the PDCCH B and the subband 2 with SCS 2 is indicated by Message 2 for the PDSCH B. Herein, Message 1 is the first message and may be SI or a broadcasting signaling or a RRC signaling. Message 2 is the second message and may be DCI transmitted in the PDCCH.

In an exemplary example, at least one portion of the first set of frequency resources may not overlap with the second set of frequency resources. Similarly, a value of the first associated numerology may be different from a value of the second associated numerology.

Referring to the implementation shown in FIG. 4 again, a portion of the control resource set with SCS 1 for PDCCH A occupies the subband 1 with SCS 1 for PDSCH A and the other portion of the control resource set with SCS 1 for PDCCH A occupies the subband 2 with SCS 2 for the PDSCH B. In other words, within subband 2 with SCS 2 for PDSCH B, some resource can be configured to the control resource set with SCS 1 for PDCCH A. The first set of frequency resources for the PDCCH is not exactly within the second set of frequency resources for the PDSCH corresponding to the PDCCH. As such, the PDCCH and the PDSCH can have different subband partitioning and corresponding numerology configurations. Therefore, bandwidth resources are effectively utilized and full flexibility of resource configuration is provided.

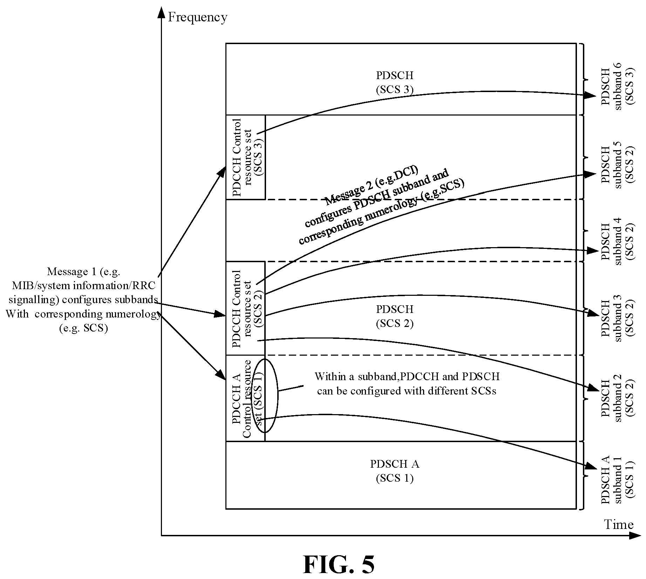

Referring to the implementation shown in FIG. 5, this implementation is similar as that shown in FIG. 4. The difference is that subbands are partitioned with identical-sizes in this implementation. Different amount of resources can be configured to different numerologies by allocating different number of subbands. For example, in FIG. 5, four subbands with the identical bandwidth, i.e., subband 2 - subband 5, are indicated for PDSCH B. Within subband 2, the PDCCH is configured with SCS 1 and the PDSCH is configured with SCS 2. The value of the first associated numerology is different from that of the second associated numerology. The values of the numerologies for the PDCCH and the PDSCH may be different.

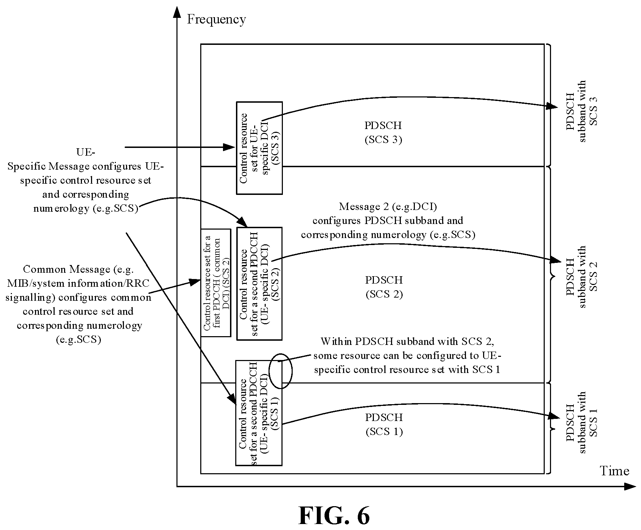

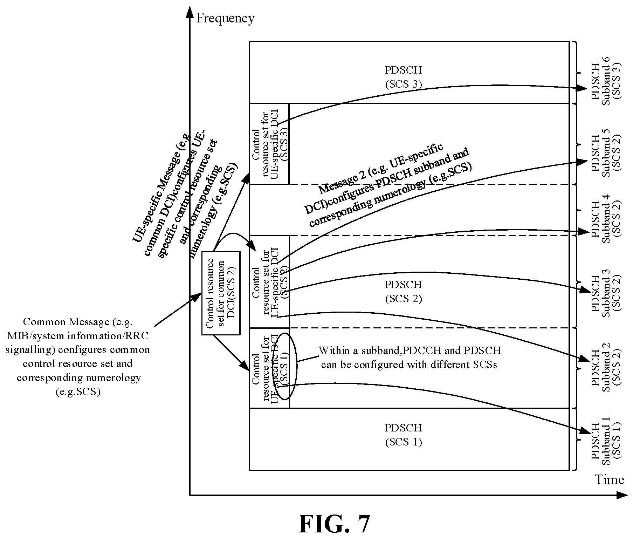

In an exemplary example, the first message includes a common message and a UE-specific message. The common massage is configured to indicate a common control resource set with an associated numerology for a first PDCCH and the UE-specific message is configured to indicate a UE-specific control resource set with an associated numerology for a second PDCCH. The second message is DCI transmitted in the first or second PDCCH. Referring to the implementation shown in FIG. 6, Common Message, such as SI, a broadcasting signaling or a RRC signaling, indicates a common control resource set with SCS 2 for a first PDCCH, in particular, common DCI of the first PDCCH. UE-Specific Message indicates a UE-specific control resource set with SCS 1 for a second PDCCH, in particular, UE-specific DCI of the second PDCCH. Herein, UE-specific Message may be SI, a broadcasting signaling or a RRC signaling, as shown in FIG. 6. As another example, UE-specific Message may be a common DCI indicated by the Common Message, as shown in FIG. 7. Similarly, the second message may be the common DCI indicated by the Common Message or UE-specific DCI indicated by the UE-Specific Message. In other words, the second message may be DCI transmitted in the first PDCCH or also may be DCI transmitted in the second PDCCH.

In an exemplary example, the first message may be any one of SI, a RRC signaling, or a broadcasting signaling and the second message is Downlink Control Information (DCI) transmitted in the PDCCH or a following PDCCH.

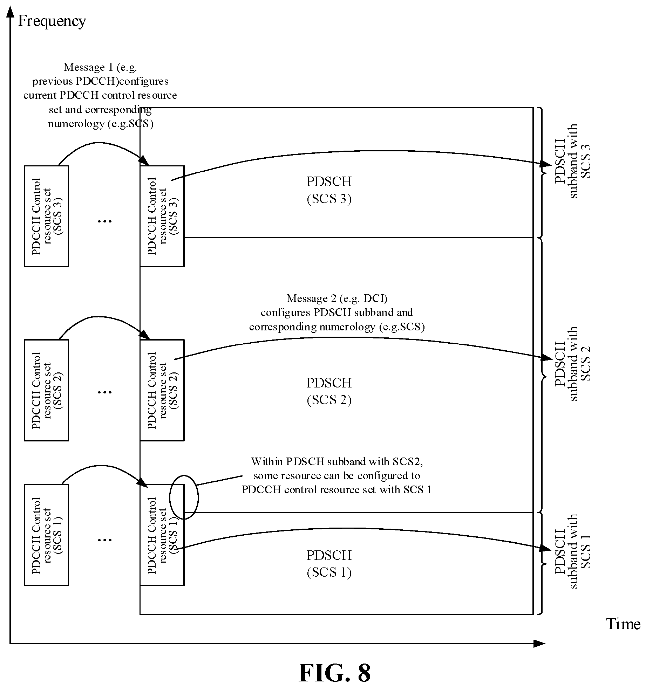

In an exemplary example, the first message comes from a previous PDCCH. In this case, the first associated numerology for the PDCCH may be the same as that for the previous PDCCH. Referring to the implementation shown in FIG. 8, Message 1 for the PDCCH C comes from a previous PDCCH C' with the same SCS. In this case, the SCS of the current resource set of PDCCH C can be implicitly derived from that of the previous PDCCH C' and the SCS is not required to be explicitly indicated by the previous PDCCH C'. Message 2 for the PDSCH C is DCI transmitted in the current PDCCH C. Similarly, the SCS for the PDSCH subband can be implicitly derived from that of the DCI, and is not required to be explicitly indicated by the DCI.

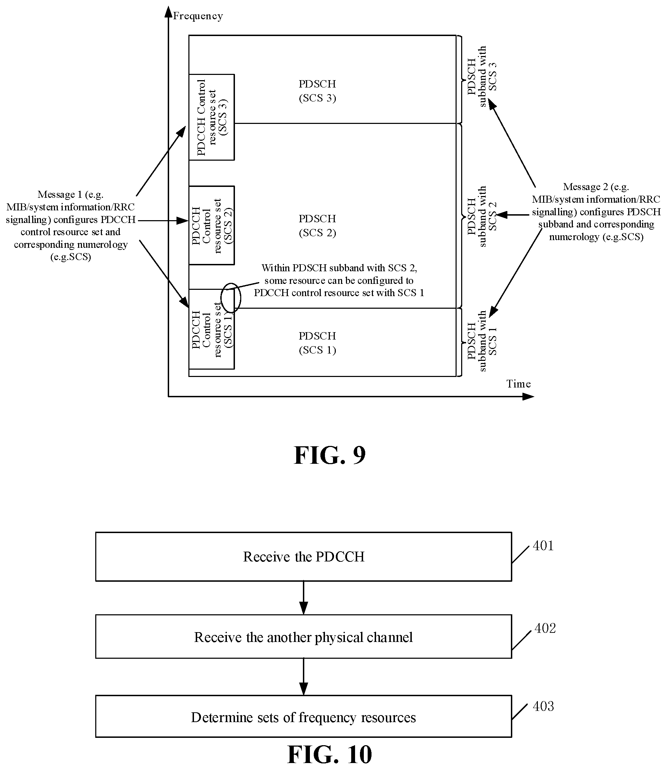

In an exemplary example, each of the first and second messages is one of SI, a RRC signaling, and a broadcasting signaling. Referring to the implementation shown in FIG. 9, Message 2, just like Message 1, may be also one of SI, a RRC signaling, and a broadcasting signaling.

As shown above, since the resources for the PDCCH and the PDSCH are separately configured via separate Messages 1 and 2, overlapping resource between the resource set for PDCCH and a subband for PDSCH is possible. As shown with the circle in FIG.4, within a subband with SCS2 configured to PDSCH B, some resource can also be configured to control resource set with SCS1 for PDCCH A. In this case, the gNB scheduler can avoid resource allocation conflict by not scheduling the overlapping resource to the PDSCH B. For example, resource in first several symbols of subband 2 with SCS 2 is reserved for PDCCH A. That is, resource these first several symbols are not scheduled in transmitting PDSCH B. Further, the PDCCH may include the scheduling information of these other physical channels.

It is noted that the above implementations of the disclosure take the PDSCH as an example of the another physical channel. Definitely, other physical channels, such as, a Physical Uplink Control Channel (PUCCH) and a Physical Uplink Sharing Channel (PUSCH) are applicable.

It is noted that the above implementations of the disclosure take the SCS as an example of the numerologies. Other numerologies, such as a cyclic prefix (CP) or the like, are also applicable. In addition, both the single numerology and multi-numerology are also applicable for the above implementations.

Correspondingly, at the side of a UE, a method for determining sets of frequency resources for the PDCCH and another physical channel may be applied. FIG. 10 is a flow chart showing a method for determining sets of frequency resources for a PDCCH and another physical channel according to an implementation of the disclosure. Referring to FIG. 10, the method includes the following steps.

In step 401, the PDCCH is received. The PDCCH is transmitted in a resource from a first set of frequency resources with a first associated numerology. The first set of frequency resources with the first associated numerology is indicated by a first message for the PDCCH.

In step 402, the another physical channel is received. The another physical channel is transmitted in a resource from a second set of frequency resources with a second associated numerology. The second set of frequency resources with the second associated numerology is indicated by a second message for the another physical channel.

In step 403, sets of frequency resources for the PDCCH and the another physical channel are determined according to the first and second messages.

In an example, the first and second sets of frequency resources are a bandwidth part (BWP) or a control resource set (CORESET) in a BWP.

In an example, at least one portion of the first set of frequency resources does not overlap with the second set of frequency resources. A value of the first associated numerology is different from a value of the second associated numerology.

In an example, the first message is one of SI, a RRC signaling, or a broadcasting signaling and the second message is Downlink Control Information (DCI) transmitted in the PDCCH or a following PDCCH.

In an example, the first message includes a common message and a UE-specific message, the common massage being configured to indicate a common control resource set with an associated numerology for a first PDCCH and the UE-specific message being configured to indicate a UE-specific control resource set with an associated numerology for a second PDCCH. The second message is DCI transmitted in the first or second PDCCH.

In an example, the first message comes from a previous PDCCH.

In an example, the first associated numerology for the PDCCH is the same as that for the previous PDCCH.

In an example, each of the first and second messages is one of SI, a RRC signaling, and a broadcasting signaling.

In an example, the another physical channel is at least one of a Physical Downlink Sharing Channel (PDSCH), a Physical Uplink Control Channel (PUCCH) and a Physical Uplink Sharing Channel (PUSCH).

In an example, each of the first and second associated numerologies is at least one of a Subcarrier Spacing (SCS) and a cyclic prefix (CP).

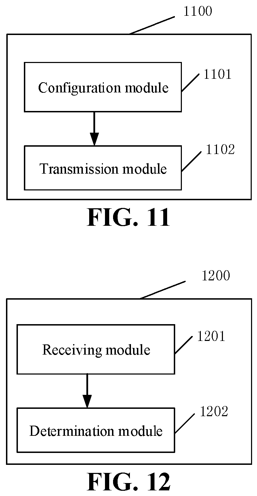

FIG. 11 illustrates an apparatus for separately configuring sets of frequency resources for a PDCCH and another physical channel according to an implementation of the disclosure. Referring to FIG. 11, the apparatus 1100 includes a configuration module 1101 and a transmission module 1102.

The configuration module 1101 is to configure a first message and a second message. The first message is configured to indicate a first set of frequency resources with a first associated numerology for the PDCCH, and the second message is configured to indicate a second set of frequency resources with a second associated numerology for the another physical channel.

The transmission module 1102 is configured to transmit the first message and the second message, transmit the PDCCH in a resource from the first set of frequency resources and transmit the another physical channel in a resource from the second set of frequency resources.

The detailed description about the first and second messages and specific implementation of the apparatus may refer to the method implementations described in combination with FIG. 3-FIG. 9, which is not described herein again.

FIG. 12 illustrates an apparatus for determining sets of frequency resources for a PDCCH and another physical channel according to an implementation of the disclosure. Referring to FIG. 12, the apparatus 1200 includes a receiving module 1201 and a determination module 1202.

The receiving module 1201 is configured to receive the PDCCH and the another physical channel. The PDCCH is transmitted in a resource from a first set of frequency resources with a first associated numerology. The first set of frequency resources with the first associated numerology is indicated by a first message for the PDCCH. The another physical channel is transmitted in a resource from a second set of frequency resources with a second associated numerology. The second set of frequency resources with the second associated numerology is indicated by a second message for the another physical channel.

The determination module 1202 is configured to determine sets of frequency resources for the PDCCH and the another physical channel according to the first and second messages.

The detailed description about the first and second messages and specific implementation of the apparatus may refer to the method implementations described in combination with FIG. 10, which is not described herein again.

### Additional examples

In example 1, there is provided a method for separately configuring sets of frequency resources for a Physical Downlink Control Channel (PDCCH) and another physical channel, comprising:
configuring a first message and a second message, the first message being configured to indicate a first set of frequency resources with a first associated numerology for the PDCCH, and the second message being configured to indicate a second set of frequency resources with a second associated numerology for the another physical channel;
transmitting the first message and the second message;
transmitting the PDCCH in a resource from the first set of frequency resources; and
transmitting the another physical channel in a resource from the second set of frequency resources.

In example 2, the method according to example 1, wherein the first and second sets of frequency resources are a bandwidth part (BWP) or a control resource set (CORESET) in a BWP.

In example 3, the method according to example 1 or 2, wherein at least one portion of the first set of frequency resources fails to overlap with the second set of frequency resources, and/or
wherein a value of the first associated numerology is different from a value of the second associated numerology.

In example 4, the method according to example 1, wherein the first message is one of System Information (SI), a Radio Resource Connection (RRC) signaling, or a broadcasting signaling and the second message is Downlink Control Information (DCI) transmitted in the PDCCH or a following PDCCH.

In example 5, the method according to example 1, wherein the first message includes a common message and a UE-specific message, the common massage being configured to indicate a common control resource set with an associated numerology for a first PDCCH and the UE-specific message being configured to indicate a UE-specific control resource set with an associated numerology for a second PDCCH, and
wherein the second message is DCI transmitted in the first or second PDCCH.

In example 6, the method according to example 1, wherein the first message comes from a previous PDCCH.

In example 7, the method according to example 6, wherein the first associated numerology for the PDCCH is the same as that for the previous PDCCH.

In example 8, the method according to example 1, wherein each of the first and second messages is one of SI, a RRC signaling, and a broadcasting signaling.

In example 9, the method according to any one of examples 1-8, wherein the another physical channel is at least one of a Physical Downlink Sharing Channel (PDSCH), a Physical Uplink Control Channel (PUCCH) and a Physical Uplink Sharing Channel (PUSCH).

In example 10, the method according to any one of examples 1-9, wherein each of the first and second associated numerologies is at least one of a Subcarrier Spacing (SCS) and a cyclic prefix (CP).

In example 11, the method according to any one of examples 1-10, wherein the PDCCH contains scheduling information of the another physical channel.

In example 12, there is provided a method for determining sets of frequency resources for a Physical Downlink Control Channel (PDCCH) and another physical channel, comprising:
receiving the PDCCH, the PDCCH being transmitted in a resource from a first set of frequency resources with a first associated numerology, wherein the first set of frequency resources with the first associated numerology is indicated by a first message for the PDCCH;
receiving the another physical channel, the another physical channel being transmitted in a resource from a second set of frequency resources with a second associated numerology, wherein the second set of frequency resources with the second associated numerology is indicated by a second message for the another physical channel; and
determining sets of frequency resources for the PDCCH and the another physical channel according to the first and second messages.

In example 13, the method according to example 12, wherein the first and second sets of frequency resources are a bandwidth part (BWP) or a control resource set (CORESET) in a BWP.

In example 14, the method according to example 12 or 13, wherein at least one portion of the first set of frequency resources fails to overlap with the second set of frequency resources, and
wherein a value of the first associated numerology is different from a value of the second associated numerology.

In example 15, the method according to example 12, wherein the first message is one of SI, a RRC signaling, and a broadcasting signaling and the second message is Downlink Control Information (DCI) transmitted in the PDCCH or a following PDCCH.

In example 16, the method according to example 12, wherein the first message includes a common message and a UE-specific message, the common massage being configured to indicate a common control resource set with an associated numerology for a first PDCCH and the UE-specific message being configured to indicate a UE-specific control resource set with an associated numerology for a second PDCCH, and
wherein the second message is DCI transmitted in the first or second PDCCH.

In example 17, the method according to example 12, wherein the first message comes from a previous PDCCH.

In example 18, the method according to example 17, wherein the first associated numerology for the PDCCH is the same as that for the previous PDCCH.

In example 19, the method according to example 12, wherein each of the first and second messages is one of SI, a RRC signaling, and a broadcasting signaling.

In example 20, the method according to any one of examples 12-19, wherein the another physical channel is at least one of a Physical Downlink Sharing Channel (PDSCH), a Physical Uplink Control Channel (PUCCH) and a Physical Uplink Sharing Channel PUSCH.

In example 21, the method according to any one of examples 12-20, wherein each of the first and second associated numerologies is at least one of a Subcarrier Spacing (SCS) and a cyclic prefix (CP).

In example 22, the method according to any one of examples 12-21, wherein the PDCCH contains scheduling information of the another physical channel.

Terms "part", "module", "system" and the like used in the specification are adopted to represent an entity, hardware, firmware, combination of hardware and software, software or software in execution related to a computer. For example, a part may be, but not limited to, a process running on a processor, the processor, an object, an executable file, an execution thread, a program and/or a computer. It is graphically represented that all applications running on computing equipment and the computing equipment may be parts. One or more parts may reside in a process and/or an execution thread, and the parts may be located on a computer and/or distributed between two or more computers. In addition, these parts may be executed from various computer-readable media on which various data structures are stored. The parts may communicate through local and/or remote processes according to, for example, signals with one or more data groups (for example, data from two parts interacting with each other in a local system, a distributed system and/or a network, for example, the Internet interacting with another system through a signal).

Those skilled in the art may realize that the modules and algorithm operations of each example described in combination with the implementations disclosed in the disclosure may be implemented by electronic hardware or a combination of computer software and the electronic hardware. Whether these functions are executed in a hardware or software manner depends on specific applications and design constraints of the technical solutions. Those skilled in the art may realize the described functions for each specific application by different methods, but such realization shall fall within the scope of the disclosure.

Those skilled in the art may clearly learn about that the specific working processes of the system, device and module described above may refer to the corresponding processes in the method implementations for convenient and brief description and will not be elaborated herein.

In some implementations provided by the disclosure, it should be understood that the disclosed system, device and method may be implemented in another manner. The device implementation described above is only schematic, and for example, division of the modules is only logic function division, and other division manners may be adopted during practical implementation. For example, multiple modules or components may be combined or integrated into another system, or some characteristics may be neglected or not executed.

The modules described as separate parts may or may not be physically separated, and parts displayed as modules may or may not be physical modules, and namely may be located in the same place, or may also be distributed to multiple network modules. Part or all of the modules may be selected to achieve the purpose of the solutions of the implementations according to a practical requirement.

In addition, each function module in each implementation of the disclosure may be integrated into a processing unit, each module may also exist independently, and two or more than two modules may also be integrated into a module.

When being implemented in form of software function module and sold or used as an independent product, the function may also be stored in a computer-readable storage medium. Based on such an understanding, the technical solutions of the disclosure substantially or parts making contributions to a conventional art may be embodied in form of software product, and the computer software product is stored in a storage medium, including a plurality of instructions configured to enable a computer device (which may be a personal computer, a server, network equipment or the like) to execute all or part of the operations of the method in each implementation of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art shall fall within the scope of protection of the disclosure. Therefore, the scope of protection of the disclosure shall be subject to the scope of protection of the claims.

## Claims

1. A method for separately configuring sets of frequency resources for a Physical Downlink Control Channel, PDCCH, and another physical channel, comprising:
configuring (301) a first message and a second message, the first message being configured to indicate a first set of frequency resources with a first associated numerology for the PDCCH, and the second message being configured to indicate a second set of frequency resources with a second associated numerology for the another physical channel;
transmitting (302) the first message and the second message;
transmitting (303) the PDCCH in a resource from the first set of frequency resources; and
transmitting (304) the another physical channel in a resource from the second set of frequency resources;
wherein the first set of frequency resources for the PDCCH is a control resource set, CORESET, in a subband and the second set of frequency resources for other physical channels is the subband, and a positions and a size of the CORESET are indicated by the first message;
wherein the another physical channel is at least one of a Physical Downlink Sharing Channel, PDSCH, a Physical Uplink Control Channel, PUCCH, and a Physical Uplink Sharing Channel, PUSCH.

2. The method according to claim 1, wherein at least one portion of the first set of frequency resources fails to overlap with the second set of frequency resources, and
wherein a value of the first associated numerology is different from a value of the second associated numerology.

3. The method according to claim 1 or 2, wherein the first message comprises a common message and a UE-specific message, the common massage being configured to indicate a common control resource set with an associated numerology for a first PDCCH and the UE-specific message being configured to indicate a UE-specific control resource set with an associated numerology for a second PDCCH, and the second message transmitted in the first PDCCH or the second PDCCH.

4. The method according to claim 1, wherein the first message is one of System Information, SI, a Radio Resource Control, RRC, signaling, or a broadcasting signaling and the second message is Downlink Control Information, DCI.

5. The method according to any one of claims 1-4, wherein each of the first and second associated numerologies is at least one of a Subcarrier Spacing, SCS, and a cyclic prefix, CP.

6. The method according to any one of claims 1-5, wherein the PDCCH contains scheduling information of the another physical channel.

7. A method for receiving a Physical Downlink Control Channel, PDCCH, and another physical channel, comprising:
receiving (401) the PDCCH, the PDCCH being transmitted in a resource from a first set of frequency resources with a first associated numerology, wherein the first set of frequency resources with the first associated numerology is indicated by a first message for the PDCCH; and
receiving (402) the another physical channel, the another physical channel being transmitted in a resource from a second set of frequency resources with a second associated numerology, wherein the second set of frequency resources with the second associated numerology is indicated by a second message for the another physical channel;
wherein the first set of frequency resources for the PDCCH is a control resource set, CORESET, in a subband and the second set of frequency resources for other physical channels is the subband, and a positions and a size of the CORESET are indicated by the first message;
wherein the another physical channel is at least one of a Physical Downlink Sharing Channel, PDSCH, a Physical Uplink Control Channel, PUCCH, and a Physical Uplink Sharing Channel, PUSCH.

8. The method according to claim 7, wherein at least one portion of the first set of frequency resources fails to overlap with the second set of frequency resources, and
wherein a value of the first associated numerology is different from a value of the second associated numerology.

9. The method according to claim 7, wherein the first message is one of SI, a RRC signaling, and a broadcasting signaling and the second message is Downlink Control Information, DCI.

10. An apparatus for separately configuring sets of frequency resources for a Physical Downlink Control Channel, PDCCH, and another physical channel, comprising:
a configuration module (1101), used to configure a first message and a second message, the first message being configured to indicate a first set of frequency resources with a first associated numerology for the PDCCH, and the second message being configured to indicate a second set of frequency resources with a second associated numerology for the another physical channel;
a transmission module (1102), used to transmit the first message and the second message; transmit the PDCCH in a resource from the first set of frequency resources; and transmit the another physical channel in a resource from the second set of frequency resources;
wherein the first set of frequency resources for the PDCCH is a control resource set, CORESET, in a subband and the second set of frequency resources for other physical channels is the subband, and a positions and a size of the CORESET are indicated by the first message;
wherein the another physical channel is at least one of a Physical Downlink Sharing Channel, PDSCH, a Physical Uplink Control Channel, PUCCH, and a Physical Uplink Sharing Channel, PUSCH.

11. The apparatus according to claim 10, wherein at least one portion of the first set of frequency resources fails to overlap with the second set of frequency resources, and
wherein a value of the first associated numerology is different from a value of the second associated numerology.

12. The apparatus according to claim 10 or 11, wherein the first message comprises a common message and a UE-specific message, the common massage being configured to indicate a common control resource set with an associated numerology for a first PDCCH and the UE-specific message being configured to indicate a UE-specific control resource set with an associated numerology for a second PDCCH, and the second message transmitted in the first PDCCH or the second PDCCH.

13. An apparatus for receiving a Physical Downlink Control Channel, PDCCH, and another physical channel, comprising a receiving module (1201), wherein the receiving module (1201) is used to:
receive the PDCCH, the PDCCH being transmitted in a resource from a first set of frequency resources with a first associated numerology, wherein the first set of frequency resources with the first associated numerology is indicated by a first message for the PDCCH; and
receive the another physical channel, the another physical channel being transmitted in a resource from a second set of frequency resources with a second associated numerology, wherein the second set of frequency resources with the second associated numerology is indicated by a second message for the another physical channel;
wherein the first set of frequency resources for the PDCCH is a control resource set, CORESET, in a subband and the second set of frequency resources for other physical channels is the subband, and a positions and a size of the CORESET are indicated by the first message;
wherein the another physical channel is at least one of a Physical Downlink Sharing Channel, PDSCH, a Physical Uplink Control Channel, PUCCH, and a Physical Uplink Sharing Channel, PUSCH.

14. The apparatus according to claim 13, wherein the first message comprises a common message and a UE-specific message, the common massage being configured to indicate a common control resource set with an associated numerology for a first PDCCH and the UE-specific message being configured to indicate a UE-specific control resource set with an associated numerology for a second PDCCH, and the second message transmitted in the first PDCCH or the second PDCCH.

15. The apparatus according to claim 13 or 14, wherein each of the first and second associated numerologies is at least one of a Subcarrier Spacing, SCS, and a cyclic prefix, CP.
